(19)

Europäisches
Patentamt
European
Patent Office
Office européen
des brevets

(11)  **EP 3 896 420 B1**

(12)  **EUROPEAN PATENT SPECIFICATION**

(45) Date of publication and mention
of the grant of the patent:
**22.01.2025 Bulletin 2025/04**

(21) Application number: **19895734.2**

(22) Date of filing: **22.10.2019**

(51) International Patent Classification (IPC):
**H04B 10/079** *(2013.01)*  **H04B 10/50** *(2013.01)*
**H04B 10/40** *(2013.01)*  **G01M 11/00** *(2006.01)*

(52) Cooperative Patent Classification (CPC):
**H04B 10/50; G01M 11/30; H04B 10/0795;**
**H04B 10/07955; H04B 10/40**

(86) International application number:
**PCT/CN2019/112606**

(87) International publication number:
**WO 2020/119261 (18.06.2020 Gazette 2020/25)**

(54) **METHOD, DEVICE AND ELECTRONIC APPARATUS FOR DETECTING PERFORMANCE STATUS OF OPTICAL MODULE IN ENGINEERING APPLICATION**

VERFAHREN, VORRICHTUNG UND ELEKTRONISCHE EINRICHTUNG ZUR ERFASSUNG DES LEISTUNGSSTATUS EINES OPTISCHEN MODULS IN EINER ENGINEERING-ANWENDUNG

PROCÉDÉ, DISPOSITIF ET APPAREIL ÉLECTRONIQUE POUR DÉTECTER L'ÉTAT DE PERFORMANCE D'UN MODULE OPTIQUE DANS UNE APPLICATION D'INGÉNIERIE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **12.12.2018 CN 201811519527**

(43) Date of publication of application:
**20.10.2021 Bulletin 2021/42**

(73) Proprietor: **ZTE Corporation**
**Shenzhen, Guangdong 518057 (CN)**

(72) Inventor: **ZHANG, Biao**
**Shenzhen, Guangdong 518057 (CN)**

(74) Representative: **Mozzi, Matteo et al**
**Jacobacci & Partners S.p.A.**
**Via Senato, 8**
**20121 Milano (IT)**

(56) References cited:
| CN-A- 105 628 218 | CN-A- 106 130 657 |
| CN-A- 106 330 296 | CN-A- 107 483 111 |
| CN-A- 109 000 889 | JP-A- 2014 166 121 |
| JP-A- 2014 166 121 | JP-A- 2015 088 806 |
| US-A1- 2009 028 551 | US-A1- 2013 209 088 |

**Description**

**Technical Field**

Embodiments of the present disclosure relate to the field of optoelectronic communication technologies, and in particular, to a method, device and electronic device for detecting a Prognostics Health Management (PHM) status of an optical transceiver in engineering application.

**Background**

An optical transceiver is a device composed of one or more optoelectronic devices, one or more functional circuits, one or more optical interfaces, etc., and the optoelectronic devices include a transmitting part and a receiving part.

The optical transceiver is one of the key components in a communication optical link, and is responsible for photoelectric conversion on information at two ends of a system. For example, a sending end converts an electrical signal into an optical signal; and after receiving the optical signal transmitted via an optical fiber, a receiving end converts the optical signal into an electrical signal. Therefore, the optical transceiver serves as a key communication hub in the whole system. However, in practical engineering applications, this hub is usually a black box, the prognostics health management status of the optical transceiver cannot be detected, and the field running quality of the optical transceiver cannot be monitored.

US2009028551A1 discloses a scheme related to dynamic digital diagnostic alerts.

JP2014166121A relates to an optical module life prediction system, an optical module life prediction device, an optical module life prediction method and an optical module life prediction program.

**Summary**

Embodiments of the present disclosure provide a method, device and electronic device for detecting a prognostics health management status of an optical transceiver in engineering application, which may solve the difficulty in prognostics health management detection of an optical transceiver in engineering application.

The present disclosure is set out in the appended set of claims.

In view of the above, a first aspect of the embodiments of the present disclosure provides a method for detecting a prognostics health management status of an optical transceiver in engineering application. The method includes: acquiring theoretical values and actual values of key parameters of the optical transceiver at a set temperature, wherein acquiring the theoretical values and the actual values of the key parameters of the optical transceiver at the set temperature comprises: acquiring a theoretical value and an actual value of an operating current of the optical transceiver at the set temperature; acquiring a theoretical value and an actual value of a transmitting optical power of the optical transceiver at the set temperature; and acquiring a theoretical value and an actual value of a receiving optical power of the optical transceiver at the set temperature; calculating differences between the theoretical values and the actual values of the key parameters; and determining, based on a pre-constructed correspondence between the differences and the prognostics health management status, the prognostics health management status of the optical transceiver according to the differences, wherein determining the prognostics health management status of the optical transceiver according to the differences based on the pre-constructed correspondence between the differences and the prognostics health management status comprises: determining whether the difference between the theoretical value and the actual value of the operating current of the optical transceiver at the set temperature is greater than a first threshold and less than a second threshold; determining whether the difference between the theoretical value and the actual value of the transmitting optical power of the optical transceiver at the set temperature is greater than a third threshold and less than a fourth threshold; determining whether the difference between the theoretical value and the actual value of the receiving optical power of the optical transceiver at the set temperature is greater than a fifth threshold and smaller than a sixth threshold; in a case where the difference between the theoretical value and the actual value of the operating current is not greater than the first threshold, the difference between the theoretical value and the actual value of the transmitting optical power is not greater than the third threshold, and the difference between the theoretical value and the actual value of the receiving optical power is not greater than the fifth threshold, determining that the prognostics health management status of the optical transceiver is a healthy status; in a case where the difference between the theoretical value and the actual value of the operating current is not less than the second threshold, the difference between the theoretical value and the actual value of the transmitting optical power is not less than the fourth threshold, or the difference between the theoretical value and the actual value of the receiving optical power is not less than the sixth threshold, determining that the prognostics health management status of the optical transceiver is a faulty status; otherwise, determining the prognostics health management status of the optical transceiver according to a degradation equation.

A second aspect of the embodiments of the present disclosure provides a device for detecting a prognostics health management status of an optical transceiver in engineering application. The device includes: a parameter acquiring module, configured to acquire theoretical values and actual values of key parameters of the optical transceiver at a set temperature, wherein the parameter acquiring module is configured to acquire a theoretical value and an actual value of an operating current of the optical transceiver at the set temperature; acquire a theoretical value and an actual value of a transmitting optical power of the optical transceiver at the set temperature; and acquire a theoretical value and an actual value of a receiving optical power of the optical transceiver at the set temperature; a difference calculating module, configured to calculate differences between the theoretical values and the actual values of the key parameters; and a status determining module, configured to determine, based on a pre-constructed correspondence between the differences and the prognostics health management status, the prognostics health management status of the optical transceiver according to the differences, wherein the status determining module is configured to determine the prognostics health management status of the optical transceiver according to the differences based on the pre-constructed correspondence between the differences and the prognostics health management status in the following manner: determining whether the difference between the theoretical value and the actual value of the operating current of the optical transceiver at the set temperature is greater than a first threshold and less than a second threshold; determining whether the difference between the theoretical value and the actual value of the transmitting optical power of the optical transceiver at the set temperature is greater than a third threshold and less than a fourth threshold; determining whether the difference between the theoretical value and the actual value of the receiving optical power of the optical transceiver at the set temperature is greater than a fifth threshold and smaller than a sixth threshold; in a case where the difference between the theoretical value and the actual value of the operating current is not greater than the first threshold, the difference between the theoretical value and the actual value of the transmitting optical power is not greater than the third threshold, and the difference between the theoretical value and the actual value of the receiving optical power is not greater than the fifth threshold, determining that the prognostics health management status of the optical transceiver is a healthy status; in a case where the difference between the theoretical value and the actual value of the operating current is not less than the second threshold, the difference between the theoretical value and the actual value of the transmitting optical power is not less than the fourth threshold, or the difference between the theoretical value and the actual value of the receiving optical power is not less than the sixth threshold, determining that the prognostics health management status of the optical transceiver is a faulty status; otherwise, determining the prognostics health management status of the optical transceiver according to a degradation equation.

A third aspect of the embodiments of the present disclosure provides an electronic apparatus, including a processor and a memory for storing a computer program operable on the processor. The processor is configured to execute the method according to the first aspect of the embodiments of the present disclosure when running the computer program.

A fourth aspect of the embodiments, not being part of the claimed invention, provides a non-transitory computer-readable storage medium. The non-transitory computer-readable storage medium stores computer-executable instructions, and the computer-executable instructions are configured to execute the method in the foregoing aspects of the embodiments of the present disclosure.

A fifth aspect of the embodiments, not being part of the claimed invention, provides a computer program product. The computer program product includes a computer program stored in a non-transitory computer-readable storage medium. The computer program includes program instructions. When the program instructions are executed by a computer, the computer is enabled to execute the method described in the foregoing aspects of the embodiments of the present disclosure.

Additional aspects and advantages of the embodiments of the present disclosure will be provided in part in the following descriptions. A part of the aspects and advantages may become apparent from the following descriptions, or be learned from implementation of the embodiments of the present disclosure.

## Brief Description of the Drawings

To describe the technical solutions in the embodiments of the present disclosure more clearly, the following briefly introduces the accompanying drawings required for describing the embodiments or the prior art. Apparently, the accompanying drawings in the following description show merely some embodiments of the present disclosure, and a person having ordinary skill in the art may derive other drawings from these accompanying drawings without creative efforts.

Fig. 1 is a flowchart of a method for detecting a prognostics health management status of an optical transceiver in engineering application according to an embodiment of the present disclosure;

Fig. 2 is a flowchart of a method for determining a theoretical value of an operating current of an optical transceiver at a set temperature according to an embodiment of the present disclosure;

Fig. 3 is a flowchart of a method for determining a theoretical value of a transmitting optical power of an optical transceiver at a set temperature according to an embodiment of the present disclosure;

Fig. 4 is a flowchart of a method for determining a theoretical value of a receiving optical power of an optical transceiver at a set temperature according to an embodiment of the present disclosure;

Fig. 5 is a flowchart of a method for determining a prognostics health management status of an optical transceiver according to degradation equation according to an embodiment of the present disclosure;

Fig. 6 is a schematic diagram of a device for detecting a prognostics health management status of an optical transceiver in engineering application according to an embodiment of the present disclosure; and

Fig. 7 is a schematic diagram of an electronic apparatus according to an embodiment of the present disclosure.

## Detailed Description of the Embodiments

To make the objectives, technical solutions, and advantages of the embodiments of the present disclosure clearer, the following clearly and completely describes the technical solutions in the embodiments of the present disclosure with reference to the accompanying drawings in the embodiments of the present disclosure. Apparently, the embodiments described below are merely a part rather than all of the embodiments of the present disclosure. All other embodiments that can be acquired by a person having ordinary skill in the art based on the embodiments of the present disclosure without creative efforts shall fall within the scope of protection of the present disclosure.

Embodiment 1

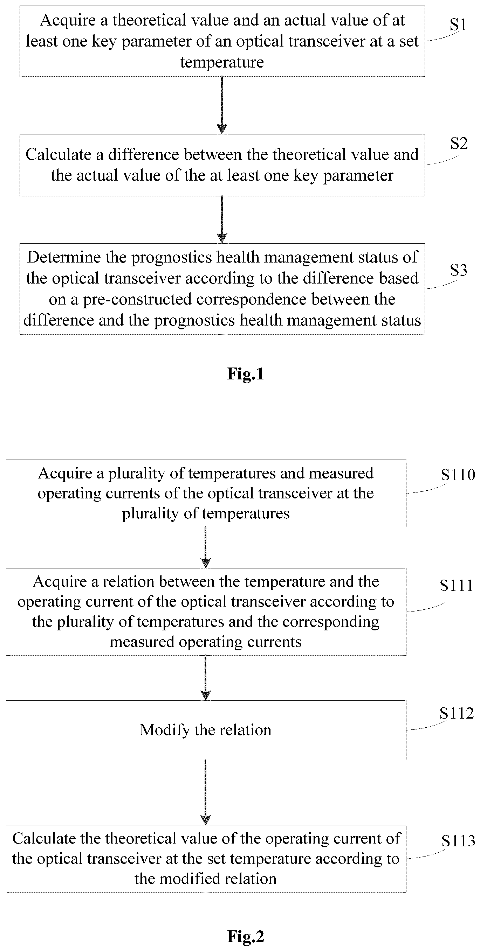

Fig. 1 is a flowchart of a method for detecting a prognostics health management status of an optical transceiver in engineering application according to an embodiment of the present disclosure. As shown in Fig. 1, the method includes operations S1 to S3.

In operation S1, a theoretical value and an actual value of at least one key parameter of the optical transceiver at a set temperature are acquired. In some exemplary implementations of the embodiment of the present disclosure, the set temperature may be a temperature set according to a specific situation, or may be arbitrary temperature.

The theoretical value of the key parameter may be calculated according to a preset calculation formula, or may be acquired by looking up in a preset key parameter configuration table. The actual value of the key parameter is an actual value collected in real time during the running of the optical transceiver in engineering application.

In operation S2, a difference between the theoretical value and the actual value of the at least one key parameter is calculated.

In operation S3, the prognostics health management status of the optical transceiver is determined according to the difference based on a pre-constructed correspondence between the difference and the prognostics health management status.

In some exemplary implementations of the embodiment of the present disclosure, the operations S1 to S3 are repeated continuously to monitor the prognostics health management status of the optical transceiver in real time.

In some exemplary implementations of the embodiment of the present disclosure, S1 includes operations as follows. A theoretical value and an actual value of an operating current of the optical transceiver at the set temperature are acquired. A theoretical value and an actual value of a transmitting optical power of the optical transceiver at the set temperature are acquired. A theoretical value and an actual value of a receiving optical power of the optical transceiver at the set temperature are acquired.

In some exemplary implementations of the embodiment of the present disclosure, as shown in Fig. 2, the method for acquiring the theoretical value of the operating current of the optical transceiver at the set temperature may include the following operations S110 to S113. In operation S110, a plurality of temperatures and measured operating currents of the optical transceiver at the plurality of temperatures are acquired. In operation S111, a relation between the temperature and the operating current of the optical transceiver is acquired according to the plurality of temperatures and the corresponding measured operating currents. For example, the relation between the temperature and the operating current may be a basic N-order polynomial whose coefficients can be modified according to actual data. Taking a 3-order polynomial $I(T) = A*T^3 + B*T^2 + C*T + D$ as an example, $I(T)$ represents the current at the temperature T, A, B, C are coefficients and D is a constant term. In operation S112, the relation is modified. The coefficients of the acquired precise relation between the temperature and the operating current are further stored in the corresponding coefficient allocation units. In exemplary implementations, any one of the following two manners may be adopted to modify the relation, but the specific manner adopted is not limited to the following two manners.

Manner 1: the plurality of acquired temperatures are partitioned to acquire temperature intervals, for example, the plurality of acquired temperatures are divided into two temperature intervals according to three temperature points, i.e. normal temperature, high temperature, and low temperature. A change rate K of a current with a temperature respectively corresponding to each temperature interval is calculated. The change rate K may be calculated according to an operating current difference $\delta I$ at two end-point temperatures in the same temperature interval and a temperature difference $\delta T$

between the two end-point temperatures in the temperature interval. For example, $K = \delta I/\delta T$. The change rate of the current with the temperature corresponding to each temperature interval is respectively multiplied by the relation to acquire a respective relation between the temperature and the operating current corresponding to each temperature interval.

Manner 2: at least two measured operating currents of the optical transceiver and temperatures respectively corresponding to the at least two measured operating currents are substituted into the relation to modify at least one parameter of the relation.

For example, the maximum influence coefficient of the relation between the temperature and the operating current may be accurately calculated according to the factory data of the optical transceiver. For example, there are two groups of factory data of the optical transceiver, one group of factory data being the temperature 25 degrees centigrade and the measured operating current of the optical transceiver at 25 degrees centigrade, and the other group of factory data being the temperature 85 degrees centigrade and the measured operating current of the optical transceiver at 85 degrees centigrade. The two groups of factory data are substituted into a polynomial $I(T) = A*T^3 + B*T^2 + C*T + D$, thereby calculating the coefficient $C = [I_H - I_R - A*(T_H - T_R)^3 - B*(T_H - T_R)^2]/(T_H - T_R)$. Herein, $I_H$ represents the measured operating current of the optical transceiver at 85 degrees centigrade, $I_R$ represents the measured operating current of the optical transceiver at 25 degrees centigrade, $T_H$ represents 85 degrees centigrade, and $T_R$ represents 25 degrees centigrade. In the same manner, if more measured data (temperature and operating current) can be acquired, all parameters of the polynomial can be modified.

In operation S113, the theoretical value of the operating current of the optical transceiver at the set temperature is calculated according to the modified relation.

In some exemplary implementations of the embodiment of the present disclosure, it is also possible to look up in a preset operating current configuration table of the optical transceiver to acquire an operating current corresponding to the set temperature, and this operating current corresponding to the set temperature is determined as the theoretical value of the operating current of the optical transceiver.

For example, the operating current configuration table of the optical transceiver is as follows:

| Temperature (°C) | Operating current (mA) | Temperature (°C) | Operating current (mA) |
|---|---|---|---|
| -44 | 35.62674904 | 31 | 42.96387993 |
| -39 | 35.93094271 | 36 | 42.61262694 |
| -34 | 37.15564126 | 41 | 48.56783027 |
| -29 | 38.46670215 | 46 | 45.65774787 |
| -24 | 36.19888782 | 51 | 46.82508765 |
| -19 | 37.46822781 | 56 | 48.96397644 |
| -14 | 37.89169671 | 61 | 47.75447679 |
| -9 | 38.2807614 | 66 | 49.4552448 |
| -4 | 38.3162014 | 71 | 53.03963525 |
| 1 | 38.43198085 | 76 | 51.3992 |
| 6 | 38.86738141 | 81 | 59.4517968 |
| 11 | 41.64279328 | 86 | 63.11399117 |
| 16 | 41.04516679 | 91 | 69.13894832 |
| 21 | 39.81680438 | 96 | 69.56130848 |
| 26 | 43.20503984 | | |

When the set temperature is 36°C, the corresponding theoretical value of the operating current is determined to be 42.61262694mA by looking up in the table above.

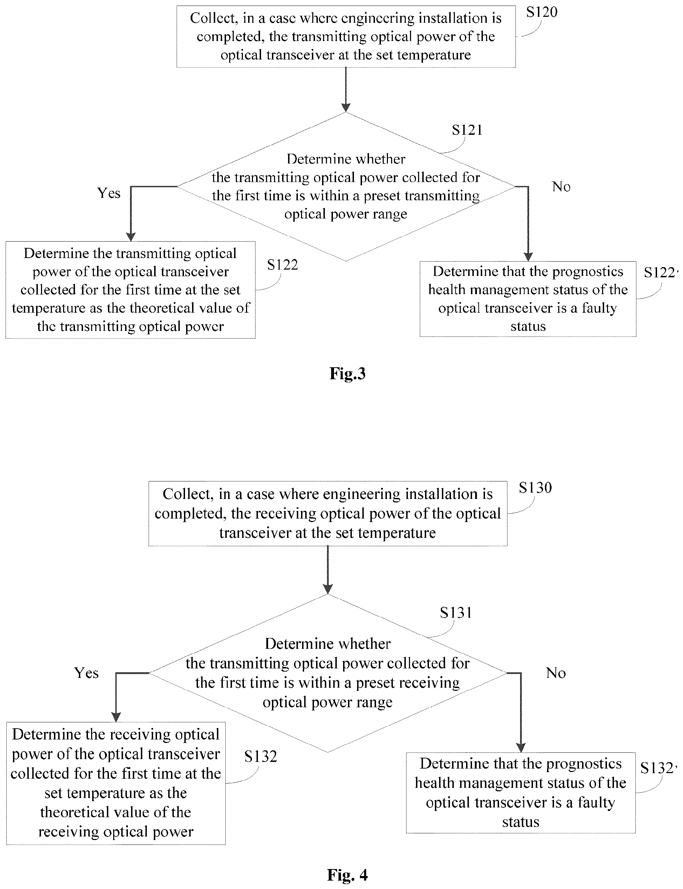

In some exemplary implementations of the embodiment of the present disclosure, as shown in Fig. 3, the method for acquiring the theoretical value of the transmitting optical power of the optical transceiver at the set temperature may include the following operations S120 to S122'. In operation S120, in a case where engineering installation is completed, the transmitting optical power of the optical transceiver at the set temperature is collected. In operation S121, whether the transmitting optical power collected for the first time is within a preset transmitting optical power range is determined. In some exemplary implementations of the embodiment of the present disclosure, the preset transmitting optical power range is greater than the minimum transmitting optical power required by the specification of the optical transceiver, and less than the maximum transmitting optical power required by the specification of the optical transceiver.

In operation S 122, in a case where the transmitting optical power collected for the first time is within the preset transmitting optical power range, the transmitting optical power of the optical transceiver collected for the first time at the set temperature is determined as the theoretical value of the transmitting optical power.

In operation S122', in a case where the transmitting optical power collected for the first time is not within the preset transmitting optical power range, it is determined that the prognostics health management status of the optical transceiver is a faulty status.

In some exemplary implementations of the embodiment of the present disclosure, the theoretical value of the transmitting optical power of the optical transceiver at the set temperature may alternatively be acquired by using the following method. The theoretical value of the transmitting optical power of the optical transceiver is calculated according to the following formula:

$$Power(T) = I(T)*SE(T) + Pth$$

Herein, Power(T) represents the theoretical value of the transmitting optical power of the optical transceiver at a temperature T, and I(T) represents the theoretical value of the operating current of the optical transceiver at the temperature T; SE(T) represents a function equation of a slope efficiency of a laser in the optical transceiver at the temperature T, and is a polynomial function between the slope efficiency and temperature distribution. Here, taking the polynomial function being based on linear term as an example (the polynomial function being based on quadratic term or cubic term may also be used) SE(T)=mT+n, where m and n are coefficients, and Pth represents a constant term. The theoretical value of the transmitting optical power at any temperature can be acquired according to the function relation.

In some exemplary implementations of the embodiment of the present disclosure, as shown in Fig. 4, the method for acquiring the theoretical value of the receiving optical power of the optical transceiver at the set temperature may include the following operations S130 to S132'. In operation S130, in a case where engineering installation is completed, the receiving optical power of the optical transceiver at the set temperature is collected. In operation S131, whether the receiving optical power collected for the first time is within a preset receiving optical power range is determined. In some exemplary implementations of the embodiment of the present disclosure, the preset receiving optical power range is greater than the theoretical value of the transmitting optical power of the optical transceiver + typical optical fiber loss + typical LC insertion loss, where the typical optical fiber loss and the typical LC insertion loss are known parameters.

In operation S132, in a case where the receiving optical power collected for the first time is within the preset receiving optical power range, the receiving optical power of the optical transceiver collected for the first time at the set temperature is determined as the theoretical value of the receiving optical power.

In operation S132', in a case where the receiving optical power collected for the first time is not within the preset receiving optical power range, it is determined that the prognostics health management status of the optical transceiver is a faulty status.

In some exemplary implementations of the embodiments of the present disclosure, the operation for acquiring the actual operating current of the optical transceiver at the set temperature may be implemented in the following manner. The actual operating current is acquired by internal monitoring of the optical transceiver at the set temperature. In some exemplary implementations of the embodiment of the present disclosure, the operation for acquiring the actual value of the transmitting optical power of the optical transceiver at the set temperature may be implemented in the following manner. The actual value of the transmitting optical power of the optical transceiver at the set temperature is collected in a polling manner. Specifically, when the set temperature is reached for the second time, the transmitting optical power is recorded in a buffer area. The transmitting optical power when the set temperature is reached for the third time overwrites the transmitting optical power recorded when the set temperature is reached for the second value. Similar operation is performed during subsequent running process of the optical transceiver, so that the buffer area always stores the transmitting optical power of the optical transceiver at the latest set temperature, and this transmitting optical power collected at the latest set temperature is determined as the actual value of the transmitting optical power. In some exemplary implementations of the embodiment of the present disclosure, the operation for acquiring the actual value of the receiving optical power of the optical transceiver at the set temperature may be implemented in the following manner. The actual value of the receiving optical power of the optical transceiver at the set temperature is collected in a polling manner. Specifically, when the set temperature is reached for the second time, the receiving optical power is recorded in a buffer area. The receiving optical power when the set temperature is reached for the third time overwrites the receiving optical power recorded when the set temperature is reached for the second value. Similar operation is performed during subsequent running process of the optical transceiver, so that the buffer area always stores the receiving optical power of the optical transceiver at the latest set temperature, and this receiving optical power collected at the latest set temperature is determined as the actual value of the receiving optical power.

In some exemplary implementations of the embodiment of the present disclosure, S2 may include the following operations S210 to S230. In operation S210, a difference between the theoretical value and the actual value of the operating current of the optical transceiver at the set temperature is determined, and the difference is recorded into a corresponding difference storage unit. In operation S220, a difference between the theoretical value and the actual value of the transmitting optical power of the optical transceiver at the set temperature is determined, and the difference is recorded into a corresponding difference storage unit. In operation S230, a difference between the theoretical value and the actual value of the receiving optical power of the optical transceiver at the set temperature is determined, and the difference is recorded into a corresponding difference storage unit.

In some exemplary implementations of the embodiment of the present disclosure, the prognostics health management statuses of the optical transceiver are defined as four statuses according to the trend of the amount of the difference variation: healthy, suboptimal healthy, risk observation, and faulty. The failure severity of the four statuses increases in turn, but an optical transceiver does not have to go through each of the four statuses. In some exemplary implementations of the embodiment, S3 may include the following operations S310 to S340. In operation S310, whether the difference between the theoretical value and the actual value of the operating current of the optical transceiver at the set temperature is greater than a first threshold and smaller than a second threshold is determined. In operation S320, whether the difference between the theoretical value and the actual value of the transmitting optical power of the optical transceiver at the set temperature is greater than a third threshold and smaller than a fourth threshold is determined. In operation S330, whether the difference between the theoretical value and the actual value of the receiving optical power of the optical transceiver at the set temperature is greater than a fifth threshold and smaller than a sixth threshold is determined. In operation S340, in a case where the difference between the theoretical value and the actual value of the operating current is not greater than the first threshold, the difference between the theoretical value and the actual value of the transmitting optical power is not greater than the third threshold, and the difference between the theoretical value and the actual value of the receiving optical power is not greater than the fifth threshold, it is determined that the prognostics health management status of the optical transceiver is a healthy status. In a case where the difference between the theoretical value and the actual value of the operating current is not less than the second threshold, the difference between the theoretical value and the actual value of the transmitting optical power is not less than the fourth threshold, or the difference between the theoretical value and the actual value of the receiving optical power is not less than the sixth threshold, it is determined that the prognostics health management status of the optical transceiver is a faulty status; otherwise, the prognostics health management status of the optical transceiver is determined according to a degradation equation.

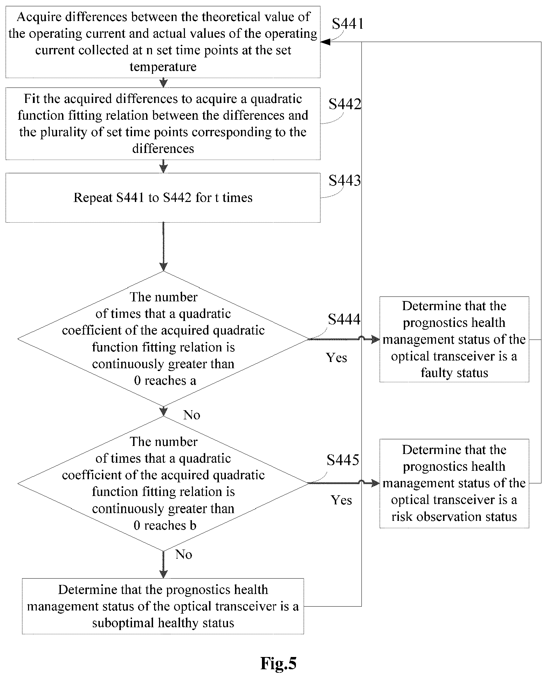

In some exemplary implementations of the embodiment of the present disclosure, as shown in Fig. 5, determining the prognostics health management status of the optical transceiver according to the degradation equation may include the following operations S341 to S345. In operation S341, differences between the theoretical value and the actual values of the operating current collected at n set time points at the set temperature are acquired. For example, n is 4, and the unit of the set time points is one week. In operation S342, the acquired differences are fitted to acquire a quadratic function fitting relation between the differences and the set time points corresponding to the differences. For example, a difference variation amount (t) = A * the set time point corresponding to the difference ^2 + B * the set time point corresponding to the difference + D. In operation S343, operations S341 to S342 are repeated for a set number of times t. For example, if t is 3, then the operations S341 to S342 are repeated for three times. In operation S344, it is determined whether the number of times that a quadratic coefficient of the acquired quadratic function fitting relation is continuously greater than 0 is not less than a first threshold a, if so, it is determined that the prognostics health management status of the optical transceiver is a faulty status, and if not, the operation S345 is executed. For example, if a is 3, if the quadratic coefficients of the quadratic function fitting relations that are acquired by repeating the operations S341 to S342 for three times are all greater than 0, it is determined that the prognostics health management status of the optical transceiver is the faulty status. In operation S345, it is determined whether the number of times that the quadratic coefficient of the acquired quadratic function fitting relation is continuously greater than 0 is less than the first threshold a and not less than a second threshold b, if so, it is determined that the prognostics health management status of the optical transceiver is a risk observation status, and if not, it is determined that the prognostics health management status of the optical transceiver is a suboptimal healthy status. For example, if b is 2, the operations S341 to S342 are repeated for three times, and if the quadratic coefficients of the quadratic function fitting relations acquired in two continuous repetitions (a first time and a second time, or a second time and a third time) are all greater than 0, it is determined that the prognostics health management status of the optical transceiver is the risk observation status; otherwise, it is determined that the prognostics health management status of the optical transceiver is the suboptimal healthy status. The first threshold a is not greater than the set number of times t, and the second threshold b is less than the first threshold a.

The described operations S341 to S345 are repeated for m times to performing real-time detection on the prognostics health management status of the optical transceiver. Herein, m may be any positive integer set according to a specific situation.

In some exemplary implementations of the embodiment of the present disclosure, the operation S340 may further include calculating a remaining service life of the optical transceiver according to the quadratic function fitting relation.

In some exemplary implementations of the embodiment of the present disclosure, the method for detecting the prognostics health management status of the optical transceiver in the engineering application may further include the following operation. The number of times that the suboptimal healthy status, the faulty status or the risk observation status of the optical transceiver appears successively is determined. When the number of times that the suboptimal healthy status, the faulty status or the risk observation status appears successively reaches a preset number of times, an alarm is output.

The method for detecting the prognostics health management status of the optical transceiver in the engineering application provided in the embodiments of the present disclosure is applicable to the self monitoring of the optical transceiver, and is also applicable to the monitoring of the optical transceiver by a system. In the embodiments of the present disclosure, all the allocation units may serve as cache units. The coefficient allocation unit needs to be mapped to a readable and writable area with protection. The difference storage unit, and the storage unit for storing data of the last plurality of rounds of sampling values of the transmitting optical power and the receiving optical power need to be mapped to a user readable area.

According to the method for detecting the prognostics health management status of the optical transceiver in the engineering application provided in the embodiments of the present disclosure, an application for self monitoring of the optical transceiver may automatically clear all cache information after the corresponding status bit is continuously operated or the optical transceiver is re-energized, wherein the data in the cache region is mapped to an open readable region of the optical transceiver according to requirements. The data in the readable region needs to be stored and can only be overwritten in an iterative manner. When the optical transceiver is monitored by the system, all records are cleared and the monitoring method is restarted after the corresponding serial number of the optical transceiver changes.

According to the method for detecting the prognostics health management status of the optical transceiver in the engineering application provided in the embodiments of the present disclosure, a theoretical value of at least one key parameter of the optical transceiver at a set temperature is calculated, an actual value of the key parameter of the optical transceiver at the set temperature is monitored in real time during the engineering application, a difference between the theoretical value and the actual value of the key parameter is calculated, and a prognostics health management status of the optical transceiver is automatically determined based on a pre-constructed corresponding relationship between the difference corresponding to the key parameter and the prognostics health management status of the optical transceiver, thereby ensuring the monitorability of the prognostics health management status of the optical transceiver and the real-time update and predictability of the prognostics health management status of the optical transceiver.

The embodiments of the present disclosure adopt a simplified, monitorable and predictable alarm manner, so as to facilitate the engineering application of the optical transceiver. The self-monitoring of the optical power and the operating current of the optical transceiver enable the alarm direction to be clearer. By adopting the technical solution, the optical transceiver is more intelligent and has better applicability.

In the embodiments of the present disclosure, internal calculation is performed based on the variation amount of the key parameter of the optical transceiver obtained by on-line monitoring during the engineering application, the relation between the operating current and the temperature acquired in advance, and a degradation function, and different status alarms are determined and reported based on the key parameter actually monitored, the calculated difference variation of the key parameter, and the degree of the degradation trend, thereby ensuring the monitorability of the quality and performance of the background optical transceiver and the real-time update and predictability of the alarm status of the optical transceiver.

The method for detecting the prognostics health management status of the optical transceiver in the engineering application provided in the embodiments of the present disclosure can be widely applied to monitor the operating status and quality performance of optical transceivers in the existing network, thereby improving the accuracy of field fault location, and reducing the maintenance costs in the engineering application.

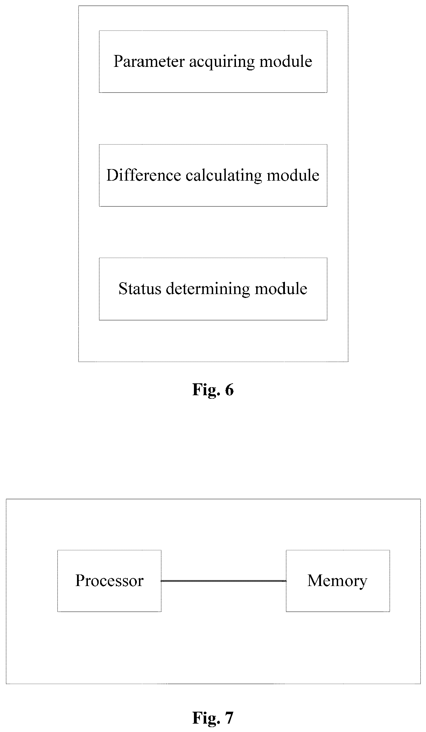

Fig. 6 is a schematic diagram of a device for detecting a prognostics health management status of an optical transceiver in an engineering application. The device may be implemented by software and/or hardware, and may generally be integrated in an electronic apparatus. For example, the device may be integrated in an optical transceiver or a system. The device can detect the prognostics health management status of an optical transceiver by executing the method for detecting the prognostics health management status of the optical transceiver in the engineering application described above. The device includes: a parameter acquiring module, configured to acquire a theoretical value and an actual value of at least one key parameter of an optical transceiver at a set temperature; a difference calculating module, configured to calculate a difference between the theoretical value and the actual value of the at least one key parameter; and a status determining module, configured to determine, based on a pre-constructed correspondence between the difference and the prognostics health management status, the prognostics health management status of the optical transceiver according to the difference.

The parameter acquiring module is configured to acquire the theoretical value and the actual value of an operating current of the optical transceiver, the theoretical value and the actual value of a transmitting optical power of the optical transceiver, and the theoretical value and the actual value of a receiving optical power of the optical transceiver at the set temperature.

The status determining module is configured to determine the prognostics health management status of the optical transceiver in a following manner. The status determining module is configured to determine whether the difference between the theoretical value and the actual value of the operating current of the optical transceiver at the set temperature is greater than a first threshold and less than a second threshold; determine whether the difference between the theoretical value and the actual value of the transmitting optical power of the optical transceiver at the set temperature is greater than a third threshold and less than a fourth threshold; determine whether the difference between the theoretical value and the actual value of the receiving optical power of the optical transceiver at the set temperature is greater than a fifth threshold and smaller than a sixth threshold; in a case where the difference between the theoretical value and the actual value of the operating current is not greater than the first threshold, the difference between the theoretical value and the actual value of the transmitting optical power is not greater than the third threshold, and the difference between the theoretical value and the actual value of the receiving optical power is not greater than the fifth threshold, determine that the prognostics health management status of the optical transceiver is a healthy status; and in a case where the difference between the theoretical value and the actual value of the operating current is not less than the second threshold, the difference between the theoretical value and the actual value of the transmitting optical power is not less than the fourth threshold, or the difference between the theoretical value and the actual value of the receiving optical power is not less than the sixth threshold, determine that the prognostics health management status of the optical transceiver is a faulty status; otherwise, determine the prognostics health management status of the optical transceiver according to a degradation equation.

The status determining module is configured to determine the prognostics health management status of the optical transceiver according to the degradation equation in the following manner. The status determining module is configured to acquire differences between the theoretical value of the operating current and actual values of the operating current collected at a plurality of set time points at the set temperature; fit the acquired differences to acquire a quadratic function fitting relation between the differences and the plurality of set time points corresponding to the differences; repeat the described two operations for a set number of times; determine whether the number of times that a quadratic coefficient of the acquired quadratic function fitting relation is continuously greater than 0 is not less than the first threshold, if yes, determine that the prognostics health management status of the optical transceiver is a faulty status, if not, determine whether the number of times that the acquired quadratic coefficient of the quadratic function fitting relation is continuously greater than 0 is less than the first threshold and not less than a second threshold, if so, determine that the prognostics health management status of the optical transceiver is a risk observation status, if not, determine that the prognostics health management status of the optical transceiver is a suboptimal healthy status. The first threshold is not greater than the set number of times, and the second threshold is less than the first threshold.

Fig. 7 is a schematic diagram of an electronic apparatus provided by an embodiment of the present disclosure. As shown in Fig. 7, the electronic apparatus includes a processor and a memory for storing a computer program that can run on the processor. When the processor runs the computer program, the following operations are executed: acquiring a theoretical value and an actual value of at least one key parameter of an optical transceiver at a set temperature; calculating a difference between the theoretical value and the actual value of the at least one key parameter; determining the prognostics health management status of the optical transceiver according to the difference based on a pre-constructed correspondence between the difference and the prognostics health management status.

In the above embodiments, the description of each embodiment has its emphasis, and the part not described in detail in a certain embodiment may refer to the relevant description of other embodiments.

In the several embodiments provided in the present disclosure, the disclosed apparatus may be implemented in other manners. For example, the apparatus embodiments described above are merely exemplary, for example, division of the foregoing modules is merely logical function division, and there may be other division in actual implementation. For example, a plurality of modules or components may be combined or may be integrated into another system, or some features may be ignored or not executed.

The modules described as separate parts may or may not be physically separate. Parts illustrated as modules may or may not be physical modules, that is, different parts may be located in the same position, or may be distributed on a plurality of network modules. A part or all of the modules may be selected according to actual needs to implement the solutions of the embodiments.

In addition, various function modules in each embodiment of the present disclosure may be integrated in one processing module, or may exist alone physically, or two or more modules may be integrated into one module. The integrated module may be implemented in a form of hardware, and may alternatively be implemented in the form of a software functional module.

If the integrated module is implemented in the form of a software functional module and sold or used as an independent product, the integrated module may be stored in a computer readable memory. Based on such understanding, the essence of the technical solutions of the present disclosure, or the part contributing to the prior art, or all or a part of the technical solutions may be implemented in a form of a software product. The computer software product may be stored in a memory and includes a plurality of instructions for instructing a computer device (which may be a personal computer, a server, a network device, or the like) to perform all or a part of the operations of the methods described in the embodiments of the present disclosure. The foregoing memory includes any medium that can store program codes, such as a USB flash disk, a Read-Only Memory (ROM), a Random Access Memory (RAM), a mobile hard disk, a magnetic disk, or an optical disk.

The person having ordinary skill in the art should understand that all or part of the operations of the methods in the embodiments may be implemented via instructing relevant hardware by a program. The program may be stored in a computer readable memory, and the memory may include a flash memory disk, a Read-Only Memory (ROM for short), a Random Access Memory (RAM for short), a magnetic disk, or an optical disk.

Embodiment 2

The embodiment of the present disclosure provides a non-transitory (non-volatile) computer storage medium. The computer storage medium stores a computer-executable instruction. The computer-executable instruction can execute the method in any of the described method embodiments.

Embodiment 3

The embodiment provides a computer program product. The computer program product includes a computer program stored in a non-transitory computer-readable storage medium. The computer program includes program instructions. When the program instructions are executed by a computer, the computer is enabled to execute the method in any of the method embodiments.

It should be noted that, in this specification, the terms "include", "include", or any other variation thereof are intended to cover a non-exclusive inclusion, so that a process, a method, an item, or an apparatus that includes a series of elements not only includes those elements, but also may include other elements that are not explicitly listed, or further includes inherent elements of the process, the method, the item, or the apparatus. An element limited by "including a... " does not exclude that there are other same elements in the process, method, item, or device that includes the element, unless there are more limitations.

It should be noted that, in this specification, terms such as "first" and "second" are merely used to distinguish one entity or operation from another entity or operation, and do not necessarily require or imply any actual relationship or sequence between these entities or operations.

Through the description of the foregoing embodiments, a person having ordinary in the art may clearly understand that the methods described in the embodiments of the present disclosure may be implemented by software in addition to a necessary universal hardware platform, and may also be implemented by hardware. However, in many cases, the former is a preferred implementation. Based on such understanding, the essence of technical solution of the embodiments of the present disclosure, or in other words, the part of the technical solutions making contributions to the conventional art, may be embodied in the form of a software product stored in a storage medium (such as a Read-Only Memory (ROM)/Random Access Memory (RAM), a magnetic disk and an optical disc), including a number of instructions for enabling a terminal device (which may be a mobile phone, a computer, a server, an air conditioner, or a network device, etc.) to perform the methods described in various embodiments of the present disclosure.

The foregoing descriptions are merely exemplary embodiments of the present disclosure, but are not intended to limit the patent scope of the present disclosure.

**Claims**

1. A method for detecting a prognostics health management status of an optical transceiver in engineering application, comprising:

    acquiring (S1) theoretical values and actual values of key parameters of the optical transceiver at a set temperature, wherein acquiring (S1) the theoretical values and the actual values of the key parameters of the optical transceiver at the set temperature comprises: acquiring a theoretical value and an actual value of an operating current of the optical transceiver at the set temperature; acquiring a theoretical value and an actual value of a transmitting optical power of the optical transceiver at the set temperature; and acquiring a theoretical value and an actual value of a receiving optical power of the optical transceiver at the set temperature;
    calculating (S2) differences between the theoretical values and the actual values of the key parameters; and
    determining (S3), based on a pre-constructed correspondence between the differences and the prognostics health management status, the prognostics health management status of the optical transceiver according to the differences,
    wherein determining (S3) the prognostics health management status of the optical transceiver according to the differences based on the pre-constructed correspondence between the differences and the prognostics health management status comprises:

> determining (S310) whether the difference between the theoretical value and the actual value of the operating current of the optical transceiver at the set temperature is greater than a first threshold and less than a second threshold;
> determining (S320) whether the difference between the theoretical value and the actual value of the transmitting optical power of the optical transceiver at the set temperature is greater than a third threshold and less than a fourth threshold;
> determining (S330) whether the difference between the theoretical value and the actual value of the receiving optical power of the optical transceiver at the set temperature is greater than a fifth threshold and smaller than a sixth threshold;
> in a case where the difference between the theoretical value and the actual value of the operating current is not greater than the first threshold, the difference between the theoretical value and the actual value of the transmitting optical power is not greater than the third threshold, and the difference between the theoretical value and the actual value of the receiving optical power is not greater than the fifth threshold, determining (S340) that the prognostics health management status of the optical transceiver is a healthy status;
> in a case where the difference between the theoretical value and the actual value of the operating current is not less than the second threshold, the difference between the theoretical value and the actual value of the transmitting optical power is not less than the fourth threshold, or the difference between the theoretical value and the actual value of the receiving optical power is not less than the sixth threshold, determining (S340) that the prognostics health management status of the optical transceiver is a faulty status;
> otherwise, determining (S340) the prognostics health management status of the optical transceiver according to a degradation equation.

2. The method for detecting the prognostics health management status according to claim 1, wherein acquiring the theoretical value of the operating current of the optical transceiver at the set temperature comprises:

> acquiring (S110) a plurality of temperatures and measured operating currents of the optical transceiver at the plurality of temperatures;
> acquiring (S111) a relation between the temperature and the operating current of the optical transceiver according to the plurality of temperatures and the corresponding measured operating currents;
> modifying (S112) the relation;
> calculating (S113) the theoretical value of the operating current of the optical transceiver at the set temperature according to the modified relation.

3. The method for detecting the prognostics health management status according to claim 2, wherein modifying (S112) the relation comprises:

> partitioning the plurality of acquired temperatures to acquire temperature intervals;
> calculating a change rate of a current with a temperature corresponding to each temperature interval; and
> multiplying the change rate of the current with the temperature corresponding to each temperature interval by the relation respectively to acquire a respective relation between the temperature and the operating current corresponding to each temperature interval.

4. The method for detecting the prognostics health management status according to claim 3, wherein calculating the change rate of the current with the temperature corresponding to each temperature interval comprises:

> acquiring a temperature difference by performing a subtraction between a minimum temperature and a maximum temperature in a same temperature interval;
> acquiring a current difference by performing a subtraction between the measured operating current corresponding to the minimum temperature and the measured operating current corresponding to the maximum temperature; and
> dividing the current difference by the temperature difference to acquire the change rate of the current with the temperature corresponding to the temperature interval.

5. The method for detecting the prognostics health management status according to claim 2, wherein modifying (S112) the relation comprises:

substituting at least two measured operating currents of the optical transceiver and temperatures respectively corresponding to the at least two measured operating currents into the relation to modify at least one parameter of the relation.

6. The method for detecting the prognostics health management status according to claim 1, wherein acquiring the theoretical value of the operating current of the optical transceiver at the set temperature comprises:
looking up in a preset operating current configuration table of the optical transceiver to determine an operating current corresponding to the set temperature as the theoretical value of the operating current of the optical transceiver.

7. The method for detecting the prognostics health management status according to claim 1, wherein acquiring the theoretical value of the transmitting optical power of the optical transceiver at the set temperature comprises:

in a case where engineering installation is completed, collecting (S120) the transmitting optical power of the optical transceiver at the set temperature;
determining (S121) whether the transmitting optical power collected for the first time is within a preset transmitting optical power range; and
in a case where the transmitting optical power collected for the first time is within the preset transmitting optical power range, determining (S122) the transmitting optical power of the optical transceiver collected for the first time at the set temperature as the theoretical value of the transmitting optical power.

8. The method for detecting the prognostics health management status according to claim 1, wherein acquiring the theoretical value of the transmitting optical power of the optical transceiver at the set temperature comprises:

calculating the theoretical value of the transmitting optical power of the optical transceiver according to the following formula:

$$Power(T) = I(T)*SE(T) + Pth$$

wherein Power(T) represents the theoretical value of the transmitting optical power of the optical transceiver at a temperature T, and I(T) represents the theoretical value of the operating current of the optical transceiver at the temperature T; SE(T) represents a function equation of a slope efficiency of a laser in the optical transceiver at the temperature T, and is a polynomial function between the slope efficiency and temperature distribution.

9. The method for detecting the prognostics health management status according to claim 1, wherein acquiring the theoretical value of the receiving optical power of the optical transceiver at the set temperature comprises:

in a case where engineering installation is completed, collecting (S130) the receiving optical power of the optical transceiver at the set temperature;
determining (S131) whether the receiving optical power collected for the first time is within a preset receiving optical power range; and
in a case where the receiving optical power collected for the first time is within the preset receiving optical power range, determining (S132) the receiving optical power of the optical transceiver collected for the first time at the set temperature as the theoretical value of the receiving optical power.

10. The method for detecting the prognostics health management status according to claim 7 or 9, further comprising:
in a case where the transmitting optical power collected for the first time is not within the preset transmitting optical power range, and/or in a case where the receiving optical power collected for the first time is not within the preset receiving optical power range, determining (S122', S132') that the prognostics health management status of the optical transceiver is a faulty status.

11. The method for detecting the prognostics health management status according to claim 1, wherein determining (S340) the prognostics health management status of the optical transceiver according to degradation equation comprises:

S341. acquiring differences between the theoretical value of the operating current and actual values of the operating current collected at a plurality of set time points at the set temperature;
S342. fitting the acquired differences to acquire a quadratic function fitting relation between the differences and the plurality of set time points corresponding to the differences;

S343. repeating S341 to S342 for a set number of times;

S344. determining whether the number of times that a quadratic coefficient of the acquired quadratic function fitting relation is continuously greater than 0 is not less than a first threshold, if so, determining that the prognostics health management status of the optical transceiver is the faulty status, and if not, executing S345;

S345. determining whether the number of times that the quadratic coefficient of the acquired quadratic function fitting relation is continuously greater than 0 is less than the first threshold and not less than a second threshold, if so, determining that the prognostics health management status of the optical transceiver is a risk observation status, and if not, determining that the prognostics health management status of the optical transceiver is a suboptimal healthy status;

wherein the first threshold is not greater than the set number of times, and the second threshold is less than the first threshold.

12. A device for detecting a prognostics health management status of an optical transceiver in engineering application, comprising:

a parameter acquiring module, configured to acquire theoretical values and actual values of key parameters of the optical transceiver at a set temperature, wherein the parameter acquiring module is configured to acquire a theoretical value and an actual value of an operating current of the optical transceiver at the set temperature; acquire a theoretical value and an actual value of a transmitting optical power of the optical transceiver at the set temperature; and acquire a theoretical value and an actual value of a receiving optical power of the optical transceiver at the set temperature;

a difference calculating module, configured to calculate differences between the theoretical values and the actual values of the key parameters; and

a status determining module, configured to determine, based on a pre-constructed correspondence between the differences and the prognostics health management status, the prognostics health management status of the optical transceiver according to the differences,

wherein the status determining module is configured to determine the prognostics health management status of the optical transceiver according to the differences based on the pre-constructed correspondence between the differences and the prognostics health management status in the following manner:

determining whether the difference between the theoretical value and the actual value of the operating current of the optical transceiver at the set temperature is greater than a first threshold and less than a second threshold;

determining whether the difference between the theoretical value and the actual value of the transmitting optical power of the optical transceiver at the set temperature is greater than a third threshold and less than a fourth threshold;

determining whether the difference between the theoretical value and the actual value of the receiving optical power of the optical transceiver at the set temperature is greater than a fifth threshold and smaller than a sixth threshold;

in a case where the difference between the theoretical value and the actual value of the operating current is not greater than the first threshold, the difference between the theoretical value and the actual value of the transmitting optical power is not greater than the third threshold, and the difference between the theoretical value and the actual value of the receiving optical power is not greater than the fifth threshold, determining that the prognostics health management status of the optical transceiver is a healthy status;

in a case where the difference between the theoretical value and the actual value of the operating current is not less than the second threshold, the difference between the theoretical value and the actual value of the transmitting optical power is not less than the fourth threshold, or the difference between the theoretical value and the actual value of the receiving optical power is not less than the sixth threshold, determining that the prognostics health management status of the optical transceiver is a faulty status;

otherwise, determining the prognostics health management status of the optical transceiver according to a degradation equation.

13. An electronic apparatus comprising a processor and a memory for storing a computer program executable on the processor, wherein the processor is configured to execute the method according to any one of claims 1 to 11 when running the computer program.

**Patentansprüche**

1. Verfahren zum Erkennen eines Prognostik-Betriebszustandsmanagementstatus eines optischen Transceivers in einer Engineering-Anwendungen, das umfasst:

   Erfassen (S1) von theoretischen Werten und tatsächlichen Werten von Schlüsselparametern des optischen Transceivers bei einer festgelegten Temperatur, wobei das Erfassen (S1) der theoretischen Werte und der tatsächlichen Werte der Schlüsselparameter des optischen Transceivers bei der festgelegten Temperatur umfasst: Erfassen eines theoretischen Werts und eines tatsächlichen Werts eines Betriebsstroms des optischen Transceivers bei der festgelegten Temperatur; Erfassen eines theoretischen Werts und eines tatsächlichen Werts einer optischen Sendeleistung des optischen Transceivers bei der festgelegten Temperatur; und Erfassen eines theoretischen Werts und eines tatsächlichen Werts einer optischen Empfangsleistung des optischen Transceivers bei der festgelegten Temperatur;
   Berechnen (S2) von Differenzen zwischen den theoretischen Werten und den tatsächlichen Werten der Schlüsselparameter; und
   Ermitteln (S3), basierend auf einer vorkonstruierten Entsprechung zwischen den Differenzen und dem Prognostik-Betriebszustandsmanagementstatus, des Prognostik-Betriebszustandsmanagementstatus des optischen Transceivers gemäß den Differenzen,
   wobei das Ermitteln (S3) des Prognostik-Betriebszustandsmanagementstatus des optischen Transceivers gemäß den Differenzen basierend auf der vorkonstruierten Entsprechung zwischen den Differenzen und dem Prognostik-Betriebszustandsmanagementstatus umfasst:

   Ermitteln (S310), ob die Differenz zwischen dem theoretischen Wert und dem tatsächlichen Wert des Betriebsstroms des optischen Transceivers bei der festgelegten Temperatur größer als ein erster Schwellenwert und kleiner als ein zweiter Schwellenwert ist;
   Ermitteln (S320), ob die Differenz zwischen dem theoretischen Wert und dem tatsächlichen Wert der optischen Sendeleistung des optischen Transceivers bei der festgelegten Temperatur größer als ein dritter Schwellenwert und kleiner als ein vierter Schwellenwert ist;
   Ermitteln (S330), ob die Differenz zwischen dem theoretischen Wert und dem tatsächlichen Wert der optischen Empfangsleistung des optischen Transceivers bei der festgelegten Temperatur größer als ein fünfter Schwellenwert und kleiner als ein sechster Schwellenwert ist;
   in einem Fall, in dem die Differenz zwischen dem theoretischen Wert und dem tatsächlichen Wert des Betriebsstroms nicht größer als der erste Schwellenwert ist, die Differenz zwischen dem theoretischen Wert und dem tatsächlichen Wert der optischen Sendeleistung nicht größer als der dritte Schwellenwert ist und die Differenz zwischen dem theoretischen Wert und dem tatsächlichen Wert der optischen Empfangsleistung nicht größer als der fünfte Schwellenwert ist, Feststellen (S340), dass der Prognostik-Betriebszustandsmanagementstatus des optischen Transceivers ein fehlerfreier Status ist;
   in einem Fall, in dem die Differenz zwischen dem theoretischen Wert und dem tatsächlichen Wert des Betriebsstroms nicht kleiner als der zweite Schwellenwert ist, die Differenz zwischen dem theoretischen Wert und dem tatsächlichen Wert der optischen Sendeleistung nicht kleiner als der vierte Schwellenwert ist oder die Differenz zwischen dem theoretischen Wert und dem tatsächlichen Wert der optischen Empfangsleistung nicht kleiner als der sechste Schwellenwert ist, Feststellen (S340), dass der Prognostik-Betriebszustandsmanagementstatus des optischen Transceivers ein fehlerbehafteter Status ist;
   anderenfalls Ermitteln (S340) des Prognostik-Betriebszustandsmanagementstatus des optischen Transceivers gemäß einer Verschlechterungsgleichung.

2. Verfahren zum Erkennen des Prognostik-Betriebszustandsmanagementstatus nach Anspruch 1, wobei das Erfassen des theoretischen Werts des Betriebsstroms des optischen Transceivers bei der festgelegten Temperatur umfasst:

   Erfassen (S110) einer Vielzahl von Temperaturen und gemessenen Betriebsströmen des optischen Transceivers bei der Vielzahl von Temperaturen;
   Erfassen (S111) einer Beziehung zwischen der Temperatur und dem Betriebsstrom des optischen Transceivers gemäß der Vielzahl von Temperaturen und den entsprechenden gemessenen Betriebsströmen;
   Modifizieren (S112) der Beziehung;
   Berechnen (S113) des theoretischen Werts des Betriebsstroms des optischen Transceivers bei der festgelegten Temperatur gemäß der modifizierten Beziehung.

**3.** Verfahren zum Erkennen des Prognostik-Betriebszustandsmanagementstatus nach Anspruch 2, wobei das Modifizieren (S112) der Beziehung umfasst:

Aufteilen der Vielzahl von erhaltenen Temperaturen in Temperaturerhaltungssintervalle;
Berechnen einer Änderungsrate eines Stroms mit einer Temperatur, die jedem Temperaturintervall entspricht; und
Multiplizieren der Änderungsrate des Stroms mit der Temperatur, die jedem Temperaturintervall entspricht, jeweils mit der Beziehung, um eine jeweilige Beziehung zwischen der Temperatur und dem Betriebsstrom zu erhalten, die jedem Temperaturintervall entspricht.

**4.** Verfahren zum Erkennen des Prognostik-Betriebszustandsmanagementstatus nach Anspruch 3, wobei das Berechnen der Änderungsrate des Stroms mit der jedem Temperaturintervall entsprechenden Temperatur umfasst:

Ermitteln einer Temperaturdifferenz durch Durchführen einer Subtraktion zwischen einer Minimaltemperatur und einer Maximaltemperatur in einem gleichen Temperaturintervall;
Erfassen einer Stromdifferenz durch Durchführen einer Subtraktion zwischen dem gemessenen Betriebsstrom, der der Mindesttemperatur entspricht, und dem gemessenen Betriebsstrom, der der Höchsttemperatur entspricht; und
Dividieren der Stromdifferenz durch die Temperaturdifferenz, um die Änderungsrate des Stroms mit der Temperatur zu erhalten, die dem Temperaturintervall entspricht.

**5.** Verfahren zum Erkennen des Prognostik-Betriebszustandsmanagementstatus nach Anspruch 2, wobei das Modifizieren (S112) der Beziehung umfasst:
Einsetzen von mindestens zwei gemessenen Betriebsströmen des optischen Transceivers und Temperaturen, die jeweils den mindestens zwei gemessenen Betriebsströmen entsprechen, in die Beziehung, um mindestens einen Parameter der Beziehung zu modifizieren.

**6.** Verfahren zum Erkennen des Prognostik-Betriebszustandsmanagementstatus nach Anspruch 1, wobei das Erfassen des theoretischen Werts des Betriebsstroms des optischen Transceivers bei der festgelegten Temperatur umfasst:
Nachschlagen in einer voreingestellten Betriebsstromkonfigurationstabelle des optischen Transceivers, um einen Betriebsstrom zu ermitteln, der der festgelegten Temperatur als theoretischer Wert des Betriebsstroms des optischen Transceivers entspricht.

**7.** Verfahren zum Erkennen des Prognostik-Betriebszustandsmanagementstatus nach Anspruch 1, wobei das Erfassen des theoretischen Werts der optischen Sendeleistung des optischen Transceivers bei der festgelegten Temperatur umfasst:

in einem Fall, in dem die Engineering-Installation abgeschlossen ist, Sammeln (S120) der optischen Sendeleistung des optischen Transceivers bei der festgelegten Temperatur;
Ermitteln (S121), ob die zum ersten Mal gesammelte optische Sendeleistung innerhalb eines voreingestellten optischen Sendeleistungsbereichs liegt; und
in einem Fall, in dem die zum ersten Mal gesammelte optische Sendeleistung innerhalb des voreingestellten optischen Sendeleistungsbereichs liegt, Ermitteln (S122) der zum ersten Mal bei der festgelegten Temperatur gesammelten optischen Sendeleistung des optischen Transceivers als theoretischen Wert der optischen Sendeleistung.

**8.** Verfahren zum Erkennen des Prognostik-Betriebszustandsmanagementstatus nach Anspruch 1, wobei das Erfassen des theoretischen Werts der optischen Sendeleistung des optischen Transceivers bei der festgelegten Temperatur umfasst:

Berechnen des theoretischen Werts der optischen Sendeleistung des optischen Transceivers nach der folgenden Formel:

$$\text{Leistung(T)} = I(T) * SE(T) + Pth$$

wobei Leistung(T) den theoretischen Wert der optischen Sendeleistung des optischen Transceivers bei einer Temperatur T darstellt und I(T) den theoretischen Wert des Betriebsstroms des optischen Transceivers bei der Temperatur T darstellt; SE(T) eine Funktionsgleichung einer Anstiegseffizienz eines Lasers in dem optischen Transceiver bei der Temperatur T darstellt und eine Polynomfunktion zwischen der Anstiegseffizienz und der Temperaturverteilung ist.

9. Verfahren zum Erkennen des Prognostik-Betriebszustandsmanagementstatus nach Anspruch 1, wobei das Erfassen des theoretischen Werts der optischen Empfangsleistung des optischen Transceivers bei der festgelegten Temperatur umfasst:

in einem Fall, in dem die Engineering-Installation abgeschlossen ist, Sammeln (S130) der optischen Empfangsleistung des optischen Transceivers bei der festgelegten Temperatur;
Ermitteln (S131), ob die zum ersten Mal gesammelte optische Empfangsleistung innerhalb eines voreingestellten optischen Empfangsleistungsbereichs liegt; und
in einem Fall, in dem die zum ersten Mal gesammelte optische Empfangsleistung innerhalb des voreingestellten optischen Empfangsleistungsbereichs liegt, Ermitteln (S132) der zum ersten Mal bei der festgelegten Temperatur gesammelten optischen Empfangsleistung des optischen Transceivers als theoretischen Wert der optischen Empfangsleistung.

10. Verfahren zum Erkennen des Prognostik-Betriebszustandsmanagementstatus nach Anspruch 7 oder 9, das ferner umfasst:
in einem Fall, in dem die zum ersten Mal gesammelte optische Sendeleistung nicht innerhalb des voreingestellten optischen Sendeleistungsbereichs liegt, und/oder in einem Fall, in dem die zum ersten Mal gesammelte optische Empfangsleistung nicht innerhalb des voreingestellten optischen Empfangsleistungsbereichs liegt, Feststellen (S122', S132'), dass der Prognostik-Betriebszustandsmanagementstatus des optischen Transceivers ein fehlerbehafteter Status ist.

11. Verfahren zum Erkennen des Prognostik-Betriebszustandsmanagementstatus nach Anspruch 1, wobei das Ermitteln (S340) des Prognostik-Betriebszustandsmanagementstatus des optischen Transceivers gemäß der Verschlechterungsgleichung umfasst:

S341. Erfassen von Differenzen zwischen dem theoretischen Wert des Betriebsstroms und tatsächlichen Werten des Betriebsstroms, die zu einer Vielzahl von festgelegten Zeitpunkten bei der festgelegten Temperatur gesammelt wurden;
S342. Anpassen der erhaltenen Differenzen, um eine quadratische Funktionsanpassungsbeziehung zwischen den Differenzen und der Vielzahl von festgelegten Zeitpunkten zu erhalten, die den Differenzen entsprechen;
S343. Wiederholen von S341 bis S342 für eine festgelegte Anzahl von Malen;
S344. Ermitteln, ob die Anzahl von Malen, bei denen ein quadratischer Koeffizient der erhaltenen quadratischen Funktionsanpassungsbeziehung kontinuierlich größer als 0 ist, nicht kleiner als ein erster Schwellenwert ist, wenn ja, Feststellen, dass der Prognostik-Betriebszustandsmanagementstatus des optischen Transceivers der fehlerbehaftete Status ist, und wenn nicht, Ausführen von S345;
S345. Ermitteln, ob die Anzahl von Malen, bei denen der quadratische Koeffizient der erhaltenen quadratischen Funktionsanpassungsbeziehung kontinuierlich größer als 0 ist, kleiner als der erste Schwellenwert und nicht kleiner als ein zweiter Schwellenwert ist, wenn ja, Feststellen, dass der Prognostik-Betriebszustandsmanagementstatus des optischen Transceivers ein Risikobeobachtungsstatus ist, und wenn nicht, Feststellen, dass der Prognostik-Betriebszustandsmanagementstatus des optischen Transceivers ein suboptimaler fehlerfreier Betriebszustandsstatus ist;
wobei der erste Schwellenwert nicht größer als die festgelegte Anzahl von Malen ist und der zweite Schwellenwert kleiner als der erste Schwellenwert ist.

12. Vorrichtung zum Erkennen eines Prognostik-Betriebszustandsmanagementstatus eines optischen Transceivers in einer Engineering-Anwendungen, die umfasst:

ein Parametererfassungsmodul, das konfiguriert ist, um theoretische Werte und tatsächliche Werte von Schlüsselparametern des optischen Transceivers bei einer festgelegten Temperatur zu erhalten, wobei das Parametererfassungsmodul konfiguriert ist, um einen theoretischen Wert und einen tatsächlichen Wert eines Betriebsstroms des optischen Transceivers bei der festgelegten Temperatur zu erfassen; einen theoretischen Wert und einen tatsächlichen Wert einer optischen Sendeleistung des optischen Transceivers bei der festgelegten Temperatur zu erfassen; und einen theoretischen Wert und einen tatsächlichen Wert einer optischen Empfangsleistung des optischen Transceivers bei der festgelegten Temperatur zu erfassen;

ein Differenzberechnungsmodul, das konfiguriert ist, um Differenzen zwischen den theoretischen Werten und den tatsächlichen Werten der Schlüsselparameter zu berechnen; und

ein Statusermittlungsmodul, das konfiguriert ist, um basierend auf einer vorkonstruierten Entsprechung zwischen den Differenzen und dem Prognostik-Betriebszustandsmanagementstatus den Prognostik-Betriebszustandsmanagementstatus des optischen Transceivers gemäß den Differenzen zu ermitteln,

wobei das Statusermittlungsmodul konfiguriert ist, um den Prognostik-Betriebszustandsmanagementstatus des optischen Transceivers gemäß den Differenzen basierend auf der vorkonstruierten Entsprechung zwischen den Differenzen und dem Prognostik-Betriebszustandsmanagementstatus auf die folgende Weise zu ermitteln:

Ermitteln, ob die Differenz zwischen dem theoretischen Wert und dem tatsächlichen Wert des Betriebsstroms des optischen Transceivers bei der festgelegten Temperatur größer als ein erster Schwellenwert und kleiner als ein zweiter Schwellenwert ist;

Ermitteln, ob die Differenz zwischen dem theoretischen Wert und dem tatsächlichen Wert der optischen Sendeleistung des optischen Transceivers bei der festgelegten Temperatur größer als ein dritter Schwellenwert und kleiner als ein vierter Schwellenwert ist;

Ermitteln, ob die Differenz zwischen dem theoretischen Wert und dem tatsächlichen Wert der optischen Empfangsleistung des optischen Transceivers bei der festgelegten Temperatur größer als ein fünfter Schwellenwert und kleiner als ein sechster Schwellenwert ist;

in einem Fall, in dem die Differenz zwischen dem theoretischen Wert und dem tatsächlichen Wert des Betriebsstroms nicht größer als der erste Schwellenwert ist, die Differenz zwischen dem theoretischen Wert und dem tatsächlichen Wert der optischen Sendeleistung nicht größer als der dritte Schwellenwert ist und die Differenz zwischen dem theoretischen Wert und dem tatsächlichen Wert der optischen Empfangsleistung nicht größer als der fünfte Schwellenwert ist, Feststellen, dass der Prognostik-Betriebszustandsmanagementstatus des optischen Transceivers ein fehlerfreier Status ist;

in einem Fall, in dem die Differenz zwischen dem theoretischen Wert und dem tatsächlichen Wert des Betriebsstroms nicht kleiner als der zweite Schwellenwert ist, die Differenz zwischen dem theoretischen Wert und dem tatsächlichen Wert der optischen Sendeleistung nicht kleiner als der vierte Schwellenwert ist oder die Differenz zwischen dem theoretischen Wert und dem tatsächlichen Wert der optischen Empfangsleistung nicht kleiner als der sechste Schwellenwert ist, Feststellen, dass der Prognostik-Betriebszustandsmanagementstatus des optischen Transceivers ein fehlerbehafteter Status ist;

anderenfalls Ermitteln des Prognostik-Betriebszustandsmanagementstatus des optischen Transceivers gemäß einer Verschlechterungsgleichung.

**13.** Elektronische Einrichtung, die einen Prozessor und einen Speicher zum Speichern eines auf dem Prozessor ausführbaren Computerprogramms umfasst, wobei der Prozessor konfiguriert ist, um beim Ausführen des Computerprogramms das Verfahren nach einem der Ansprüche 1 bis 11 auszuführen.

**Revendications**

**1.** Procédé pour détecter un état de gestion de santé pronostique d'un émetteur-récepteur optique dans une application d'ingénierie, comprenant :

l'acquisition (S1) de valeurs théoriques et de valeurs réelles de paramètres clés de l'émetteur-récepteur optique à une température définie, dans lequel l'acquisition (S1) des valeurs théoriques et des valeurs réelles des paramètres clés de l'émetteur-récepteur optique à la température définie comprend : l'acquisition d'une valeur théorique et d'une valeur réelle d'un courant de fonctionnement de l'émetteur-récepteur optique à la température définie ; l'acquisition d'une valeur théorique et d'une valeur réelle d'une puissance optique de transmission de l'émetteur-récepteur optique à la température définie ; et l'acquisition d'une valeur théorique et d'une valeur réelle d'une puissance optique de réception de l'émetteur-récepteur optique à la température définie ;

le calcul (S2) de différences entre les valeurs théoriques et les valeurs réelles des paramètres clés ; et

la détermination (S3), d'après une correspondance préconstruite entre les différences et l'état de gestion de santé pronostique, de l'état de gestion de santé pronostique de l'émetteur-récepteur optique selon les différences,

dans lequel la détermination (S3) de l'état de gestion de santé pronostique de l'émetteur-récepteur optique selon les différences d'après la correspondance préconstruite entre les différences et l'état de gestion de santé pronostique comprend :

le fait de déterminer (S310) si la différence entre la valeur théorique et la valeur réelle du courant de fonctionnement de l'émetteur-récepteur optique à la température définie dépasse un premier seuil en étant inférieure à un deuxième seuil ;

le fait de déterminer (S320) si la différence entre la valeur théorique et la valeur réelle de la puissance optique de transmission de l'émetteur-récepteur optique à la température définie dépasse un troisième seuil en étant inférieure à un quatrième seuil ;

le fait de déterminer (S330) si la différence entre la valeur théorique et la valeur réelle de la puissance optique de réception de l'émetteur-récepteur optique à la température définie dépasse un cinquième seuil en étant inférieure à un sixième seuil ;

si la différence entre la valeur théorique et la valeur réelle du courant de fonctionnement ne dépasse pas le premier seuil, que la différence entre la valeur théorique et la valeur réelle de la puissance optique de transmission ne dépasse pas le troisième seuil et que la différence entre la valeur théorique et la valeur réelle de la puissance optique de réception ne dépasse pas le cinquième seuil, le fait de déterminer (S340) que l'état de gestion de santé pronostique de l'émetteur-récepteur optique est un état sain ;

si la différence entre la valeur théorique et la valeur réelle du courant de fonctionnement n'est pas inférieure au deuxième seuil, que la différence entre la valeur théorique et la valeur réelle de la puissance optique de transmission n'est pas inférieure au quatrième seuil ou que la différence entre la valeur théorique et la valeur réelle de la puissance optique de réception n'est pas inférieure au sixième seuil, le fait de déterminer (S340) que l'état de gestion de santé pronostique de l'émetteur-récepteur optique est un état défaillant ;

sinon, la détermination (S340) de l'état de gestion de santé pronostique de l'émetteur-récepteur optique selon une équation de dégradation.

2. Procédé de détection de l'état de gestion de santé pronostique selon la revendication 1, dans lequel l'acquisition de la valeur théorique du courant de fonctionnement de l'émetteur-récepteur optique à la température définie comprend :

l'acquisition (S110) d'une pluralité de températures et de courants de fonctionnement mesurés de l'émetteur-récepteur optique à la pluralité de températures ;

l'acquisition (S111) d'une relation entre la température et le courant de fonctionnement de l'émetteur-récepteur optique selon la pluralité de températures et les courants de fonctionnement mesurés correspondants ;

la modification (S112) de la relation ;

le calcul (S113) de la valeur théorique du courant de fonctionnement de l'émetteur-récepteur optique à la température définie selon la relation modifiée.

3. Procédé de détection de l'état de gestion de santé pronostique selon la revendication 2, dans lequel la modification (S112) de la relation comprend :

le partitionnement de la pluralité de températures acquises pour acquérir des intervalles de températures ;

le calcul d'un taux de variation d'un courant selon une température correspondant à chaque intervalle de températures ; et

la multiplication du taux de variation du courant selon la température correspondant à chaque intervalle de températures par la relation respective pour acquérir une relation respective entre la température et le courant de fonctionnement correspondant à chaque intervalle de températures.

4. Procédé de détection de l'état de gestion de santé pronostique selon la revendication 3, dans lequel le calcul du taux de variation du courant selon la température correspondant à chaque intervalle de températures comprend :

l'acquisition d'une différence de températures par réalisation d'une soustraction entre une température minimale et une température maximale dans un même intervalle de températures ;

l'acquisition d'une différence de courant par réalisation d'une soustraction entre le courant de fonctionnement mesuré correspondant à la température minimale et le courant de fonctionnement mesuré correspondant à la température maximale ; et

la division de la différence de courants par la différence de températures pour acquérir le taux de variation du courant selon la température correspondant à l'intervalle de températures.

5. Procédé de détection de l'état de gestion de santé pronostique selon la revendication 2, dans lequel la modification (S112) de la relation comprend :

le remplacement d'au moins deux courants de fonctionnement mesurés de l'émetteur-récepteur optique et de températures correspondant respectivement aux au moins deux courants de fonctionnement mesurés dans la relation pour modifier au moins un paramètre de la relation.

6. Procédé de détection de l'état de gestion de santé pronostique selon la revendication 1, dans lequel l'acquisition de la valeur théorique du courant de fonctionnement de l'émetteur-récepteur optique à la température définie comprend : la recherche, dans une table de configuration de courant de fonctionnement prédéfinie de l'émetteur-récepteur optique, pour déterminer un courant de fonctionnement correspondant à la température définie comme valeur théorique du courant de fonctionnement de l'émetteur-récepteur optique.

7. Procédé de détection de l'état de gestion de santé pronostique selon la revendication 1, dans lequel l'acquisition de la valeur théorique de la puissance optique de transmission de l'émetteur-récepteur optique à la température définie comprend :

si l'installation d'ingénierie est terminée, la collecte (S120) de la puissance optique de transmission de l'émetteur-récepteur optique à la température définie ;
le fait de déterminer (S121) si la puissance optique de transmission collectée pour la première fois se situe dans une plage prédéfinie de puissances optiques de transmission ; et
si la puissance optique de transmission collectée pour la première fois se situe dans la plage prédéfinie de puissances optiques de transmission, le fait de déterminer (S122) la puissance optique de transmission de l'émetteur-récepteur optique collectée pour la première fois à la température définie comme valeur théorique de la puissance optique de transmission.

8. Procédé de détection de l'état de gestion de santé pronostique selon la revendication 1, dans lequel l'acquisition de la valeur théorique de la puissance optique de transmission de l'émetteur-récepteur optique à la température définie comprend :
le calcul de la valeur théorique de la puissance optique de transmission de l'émetteur-récepteur optique selon la formule suivante :

$$\text{Power}(T) = I(T)*SE(T) + Pth$$

où Power(T) représente la valeur théorique de la puissance optique de transmission de l'émetteur-récepteur optique à une température T et où I(T) représente la valeur théorique du courant de fonctionnement de l'émetteur-récepteur optique à la température T ; SE(T) représente une équation de fonction d'une efficacité de pente d'un laser dans l'émetteur-récepteur optique à la température T et est une fonction polynomiale entre l'efficacité de pente et la distribution de températures.

9. Procédé de détection de l'état de gestion de santé pronostique selon la revendication 1, dans lequel l'acquisition de la valeur théorique de la puissance optique de réception de l'émetteur-récepteur optique à la température définie comprend :

si l'installation d'ingénierie est terminée, la collecte (S130) de la puissance optique de réception de l'émetteur-récepteur optique à la température définie ;
le fait de déterminer (S131) si la puissance optique de réception collectée pour la première fois se situe dans une plage prédéfinie de puissances optiques de réception ; et
si la puissance optique de réception collectée pour la première fois se situe dans la plage prédéfinie de puissances optiques de réception, le fait de déterminer (S132) la puissance optique de réception de l'émetteur-récepteur optique collectée pour la première fois à la température définie comme valeur théorique de la puissance optique de réception.

10. Procédé de détection de l'état de gestion de santé pronostique selon la revendication 7 ou 9, comprenant en outre : si la puissance optique de transmission collectée pour la première fois n'est pas dans la plage prédéfinie de puissances optiques de transmission et/ou si la puissance optique de réception collectée pour la première fois n'est pas dans la plage prédéfinie de puissances optiques de réception, le fait de déterminer (S122', S132') que l'état de gestion de santé pronostique de l'émetteur-récepteur optique est un état défaillant.

11. Procédé de détection de l'état de gestion de santé pronostique selon la revendication 1, dans lequel le fait de déterminer (S340) l'état de gestion de santé pronostique de l'émetteur-récepteur optique selon l'équation de dégradation comprend :

S341. l'acquisition de différences entre la valeur théorique du courant de fonctionnement et les valeurs réelles du courant de fonctionnement collectées en une pluralité de points temporels définis à la température définie ;

S342. l'ajustement des différences acquises pour acquérir une relation d'ajustement de fonction quadratique entre les différences et la pluralité de points temporels définis correspondant aux différences ;

S343. la répétition de S341 à S342 un nombre défini de fois ;

S344. le fait de déterminer si le nombre de fois où un coefficient quadratique de la relation d'ajustement de fonction quadratique acquise dépasse continuellement 0 n'est pas inférieur à un premier seuil et, dans l'affirmative, le fait de déterminer que l'état de gestion de santé pronostique de l'émetteur-récepteur optique est l'état défaillant, dans la négative, l'exécution de S345 ;

S345. le fait de déterminer si le nombre de fois où le coefficient quadratique de la relation d'ajustement de fonction quadratique acquise dépasse continuellement 0 est inférieur au premier seuil sans être inférieur à un deuxième seuil et, dans l'affirmative, le fait de déterminer que l'état de gestion de santé pronostique de l'émetteur-récepteur optique est un état d'observation de risque, dans la négative, le fait de déterminer que l'état de gestion de santé pronostique de l'émetteur-récepteur optique est un état de santé sous-optimal ;

dans lequel le premier seuil ne dépasse pas le nombre défini de fois et le deuxième seuil est inférieur au premier seuil.

12. Dispositif de détection d'un état de gestion de santé pronostique d'un émetteur-récepteur optique dans une application d'ingénierie, comprenant :

un module d'acquisition de paramètres, configuré pour acquérir des valeurs théoriques et des valeurs réelles de paramètres clés de l'émetteur-récepteur optique à une température définie, dans lequel le module d'acquisition de paramètres est configuré pour acquérir une valeur théorique et une valeur réelle d'un courant de fonctionnement de l'émetteur-récepteur optique à la température définie ; l'acquisition d'une valeur théorique et d'une valeur réelle d'une puissance optique de transmission de l'émetteur-récepteur optique à la température définie ; et l'acquisition d'une valeur théorique et d'une valeur réelle d'une puissance optique de réception de l'émetteur-récepteur optique à la température définie ;

un module de calcul de différence, configuré pour calculer des différences entre les valeurs théoriques et les valeurs réelles des paramètres clés ; et

un module de détermination d'état, configuré pour déterminer, d'après une correspondance préconstruite entre les différences et l'état de gestion de santé pronostique, l'état de gestion de santé pronostique de l'émetteur-récepteur optique selon les différences,

dans lequel le module de détermination d'état est configuré pour déterminer l'état de gestion de santé pronostique de l'émetteur-récepteur optique selon les différences d'après la correspondance préconstruite entre les différences et l'état de gestion de santé pronostique de la manière suivante :

le fait de déterminer si la différence entre la valeur théorique et la valeur réelle du courant de fonctionnement de l'émetteur-récepteur optique à la température définie dépasse un premier seuil en étant inférieure à un deuxième seuil ;

le fait de déterminer si la différence entre la valeur théorique et la valeur réelle de la puissance optique de transmission de l'émetteur-récepteur optique à la température définie dépasse un troisième seuil en étant inférieure à un quatrième seuil ;

le fait de déterminer si la différence entre la valeur théorique et la valeur réelle de la puissance optique de réception de l'émetteur-récepteur optique à la température définie dépasse un cinquième seuil en étant inférieure à un sixième seuil ;

si la différence entre la valeur théorique et la valeur réelle du courant de fonctionnement ne dépasse pas le premier seuil, que la différence entre la valeur théorique et la valeur réelle de la puissance optique de transmission ne dépasse pas le troisième seuil et que la différence entre la valeur théorique et la valeur réelle de la puissance optique de réception ne dépasse pas le cinquième seuil, le fait de déterminer que l'état de gestion de santé pronostique de l'émetteur-récepteur optique est un état sain ;

si la différence entre la valeur théorique et la valeur réelle du courant de fonctionnement n'est pas inférieure au deuxième seuil, que la différence entre la valeur théorique et la valeur réelle de la puissance optique de transmission n'est pas inférieure au quatrième seuil ou que la différence entre la valeur théorique et la valeur réelle de la puissance optique de réception n'est pas inférieure au sixième seuil, le fait de déterminer que l'état de gestion de santé pronostique de l'émetteur-récepteur optique est un état défaillant ;

sinon, la détermination de l'état de gestion de santé pronostique de l'émetteur-récepteur optique selon une équation de dégradation.

13. Appareil électronique comprenant un processeur et une mémoire de stockage d'un programme informatique exécutable sur le processeur, dans lequel le processeur est configuré pour exécuter le procédé selon l'une quelconque des revendications 1 à 11 lors du fonctionnement du programme informatique.

Acquire a theoretical value and an actual value of at least one key parameter of an optical transceiver at a set temperature

S1

Calculate a difference between the theoretical value and the actual value of the at least one key parameter

S2

Determine the prognostics health management status of the optical transceiver according to the difference based on a pre-constructed correspondence between the difference and the prognostics health management status

S3

**Fig.1**

Acquire a plurality of temperatures and measured operating currents of the optical transceiver at the plurality of temperatures

S110

Acquire a relation between the temperature and the operating current of the optical transceiver according to the plurality of temperatures and the corresponding measured operating currents

S111

Modify the relation

S112

Calculate the theoretical value of the operating current of the optical transceiver at the set temperature according to the modified relation

S113

**Fig.2**

Collect, in a case where engineering installation is completed, the transmitting optical power of the optical transceiver at the set temperature    S120

Determine whether the transmitting optical power collected for the first time is within a preset transmitting optical power range    S121

Yes

No

Determine the transmitting optical power of the optical transceiver collected for the first time at the set temperature as the theoretical value of the transmitting optical power    S122

Determine that the prognostics health management status of the optical transceiver is a faulty status    S122'

**Fig.3**

Collect, in a case where engineering installation is completed, the receiving optical power of the optical transceiver at the set temperature    S130

Determine whether the transmitting optical power collected for the first time is within a preset receiving optical power range    S131

Yes

No

Determine the receiving optical power of the optical transceiver collected for the first time at the set temperature as the theoretical value of the receiving optical power    S132

Determine that the prognostics health management status of the optical transceiver is a faulty status    S132'

**Fig. 4**

Acquire differences between the theoretical value of the operating current and actual values of the operating current collected at n set time points at the set temperature — S441

Fit the acquired differences to acquire a quadratic function fitting relation between the differences and the plurality of set time points corresponding to the differences — S442

Repeat S441 to S442 for t times — S443

The number of times that a quadratic coefficient of the acquired quadratic function fitting relation is continuously greater than 0 reaches a — S444

Yes → Determine that the prognostics health management status of the optical transceiver is a faulty status

No

The number of times that a quadratic coefficient of the acquired quadratic function fitting relation is continuously greater than 0 reaches b — S445

Yes → Determine that the prognostics health management status of the optical transceiver is a risk observation status

No

Determine that the prognostics health management status of the optical transceiver is a suboptimal healthy status

**Fig.5**

Parameter acquiring module

Difference calculating module

Status determining module

**Fig. 6**

Processor —————— Memory

**Fig. 7**

**EP 3 896 420 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2009028551 A1
- JP 2014166121 A